Europäisches Patentamt

European Patent Office

Office européen des brevets

(19)

(11) Publication number: **0 249 285**
**A1**

## EUROPEAN PATENT APPLICATION

(21) Application number: 87201056.6

(22) Date of filing: 05.06.87

(51) Int. Cl.4: **G06F 15/72** , G06K 15/00 ,
B41B 19/00

(30) Priority: 09.06.86 NL 8601488

(43) Date of publication of application:
16.12.87 Bulletin 87/51

(84) Designated Contracting States:
AT BE CH DE FR GB IT LI NL SE

(71) Applicant: Océ-Nederland B.V.
St. Urbanusweg 43
NL-5914 CC Venlo(NL)

(72) Inventor: Robert, Rob Willem
Honingklaver 6
NL-5803 DD Venray(NL)

(74) Representative: Hanneman, Henri W.A.M.
Océ-Nederland B.V. Patents and Information
Postbus 101
NL-5900 MA Venlo(NL)

(54) **A method of and a device for filling surface parts of an image with a surface pattern.**

(57) A method of filling with a surface pattern surface parts (24, 26) of an image stored in the form of a bit-representation in a raster-image-memory (16), by
-the generation of a bit-representation of a surface pattern (28) defined uniformly over the entire image surface,
-the generation of a mask function, which gives a specific logic value to those raster points which are situated within the boundaries of the surface parts (24, 26),
-the generation of a filling pattern (F) by performing a logic operation on the bit-representation of the surface pattern and the mask function and
-the transfer of the filling pattern (F) to the raster-image-memory (16), as well as a device for performing said method.

Fig.3

EP 0 249 285 A1

## A method of and a device for filling surface parts of an image with a surface pattern

This invention relates to a method of filling with a surface pattern surface parts of an image stored in the form of a bit-representation in a raster-image-memory as well as to a device for performing such a method.

A method of this kind is used, for example, in an electronic printing system by means of which a page of text, a page of pictures, or a page having a combination of text and pictures can be formed and printed in accordance with the user's instructions. The information to be printed is, for example, input by means of a data-processing system, using the associated peripherals, and transmitted to a raster-output-printer by means of a front-end system containing a raster-image-memory.

The data relating to a complete page to be printed can be stored in the raster-image-memory. The page to be printed is divided up into a large number of raster points or pixels present in the form of a matrix, and there is a 1:1 ratio between the raster points and the 1-bit memory places of the raster-image-memory. The raster-image-memory is therefore also known as bit map. The memory places of the raster-image-memory are frequently combined into multi-bit words, e.g. 16-bit words. In such a case the memory is termed a word-oriented bit-map memory.

The raster-output-printer, e.g. a laser printer, is used to print line by line the data called serially from the raster-image-memory.

Applicants' Netherlands patent application No. 8503461 filed on 17.12.1985 describes a printing system of this kind with which it is possible to print both text information and graphic information. The characters or fonts required for the text information are stored in the form of small bit-maps and can be transferred to the required places and in the required size in the bit-map memory for the page to be printed, by means of corresponding instructions. Specific programs have been made for inputting graphic information and enable straight lines, portions of arcs of a circle and the like to be generated. The various graphic elements and symbols can be combined in various ways at the user's choice, by combining the bit-representations of the graphic elements by means of suitable logic operations in the bit-map memory. The contents of the raster-image-memory are displayed on a screen so that the user can at will vary the lay-out of the page to be printed.

It is often required optically to stress certain surface parts of the image to be printed, by filling those parts by means of a suitable surface pattern. A surface pattern of this kind may, for example, consist of cross-hatching or a dot or line raster.

When it is required to use the same surface pattern for filling a number of surface parts directly adjoining or overlapping one another, care must be taken to ensure that the pattern does not shift at the boundary between the two surface parts, or appear double in the overlap zone of the surface parts.

The object of the invention therefore is to provide a method of and a device for filling surface parts of an image with a surface pattern, in which adjoining or overlapping surface parts give a continuous pattern.

This object is achieved according to the invention by means of a method in accordance with the characterising part of claim 1.

The sub-claims give further embodiments of the method which allow great variety and ease of performance of the method by the user, and with which the time required for the computing operations and the number of accesses to the memory are minimized.

The invention will be explained by means of an example with reference to the drawings wherein:

Fig. 1 is a diagrammatic representation of a front-end system for a laser printer,

Figs. 2A to 2E are flow diagrams of the method according to the invention,

Fig. 3 is a diagram of a page in which two surface parts are filled with a surface pattern by means of method according to the invention, and

Fig. 4 is a graph for comparing processing times.

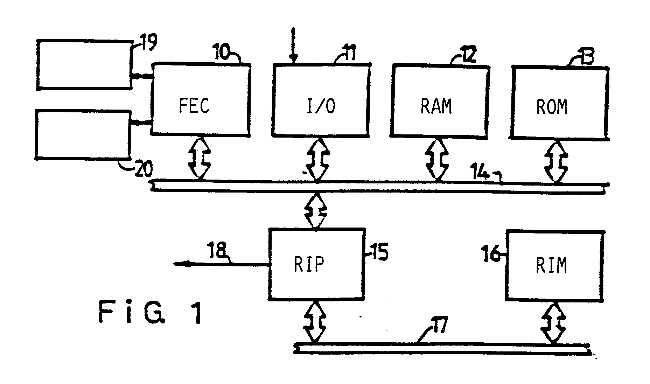

Fig. 1 is a diagrammatic representation of a front-end system for a laser printer. A front-end controller 10 (FEC) is connected to a control panel 19 and to a laser printer control system 20. The front-end controller 10 contains a 16-bit microprocessor system with a Motorola 68000 microprocessor and together with the local ROM and a part of a freely programmable memory 12 (RAM) forms the front-end control. Bit-representations of typographic characters and basic patterns for the generation of surface patterns are stored in a pattern read-out memory 13. An I/O processor 11, which also contains a 16-bit microprocessor system with a Motorola 68000 processor, is used to connect the front-end system to a diskette memory, a work station, a computer or the like. The front-end controller system 10, the I/O processor 11, the RAM 12, and pattern memory 13 are interconnected by means of a standard VME bus 14. The pattern memory 13 can also be constructed as a RAM or as a part of the RAM 12. In that case the bit-representations of the letter characters or surface patterns required are read from a hard-disk memory or floppy-disk memory into the pattern memory.

A raster-image-processor 15 (RIP) is also connected to the VME bus. The raster-image-processor 15 is also connected via a raster-image-bus 17 (RIbus) to a raster-image-memory 16 (RIM). The raster-image-processor 15 is used to fill the raster-image-memory 16 with the letter characters and basic surface patterns which are searched in the pattern memory 13 and read into raster-image-memory 16 at the required location. Also, by means of the raster-image-processor 15, other graphic information can be read out of the RAM 12 and be set aside in the raster-image-memory 16 at the required location. After the raster-image-memory 16 has been filled, it can be read out via the raster-image-processor 15, the read-out information being fed to the laser printer in the form of a serial pixel-bit stream via bus 18 and the modulator.

The image made in this way on the laser printer photoconductor consists of pixels of a size of about $0.05 \times 0.05$ mm$^2$, so that about $4000 \times 6000$ pixels are required for printing an A4 format. Accordingly, the raster-image-memory 16 has a capacity of about 24 megabits or 3 megabytes. The data transmission frequency of the video information from the raster-image-memory 16 to the laser printer 20 is about 25 megabits/s.

All the data required for a print are fed to the RAM 12 via the I/O processor 11, which is controlled by the front-end controller 10. The raster-image-memory 16 is then filled by the raster-processor 15 by means of the data thus stored in the RAM 12. In these conditions, it is usual first to feed the graphic elements from RAM 12 or pattern memory 13 and then to feed the letter characters to the raster-image-memory 16.

The raster-image-memory is a dynamic memory and also contains a logic unit which enables the data coming in via the raster-image-bus 17 to be combined with a logic operation required by the user, with the data already stored in the raster-image-memory 16. The logic operations are carried out per memory location and the result is again replaced at the corresponding memory location of the raster-image-memory 16. In this way, the image information present can be mixed with the new image information in various way (overlay).

Examples of different overlays are given in the following table, in which ND denotes the new data and OD the old data.

| Overlays | Logic Function |
|---|---|
| WRITE | ND |
| PAINT | ND.OR.OD |
| MASK | ND.AND.OD |
| ERASE | $\overline{ND}$.AND.OD |
| INVERT | $\overline{ND}$ |
| INV.PAINT | ND.EXOR.OD |
| NOP | OD |
| CLEAR | ZERO (logic 0) |
| SET | ONE (logic 1) |

The most usual logic operations upon the generation of surface patterns are PAINT, ERASE and INV.PAINT.

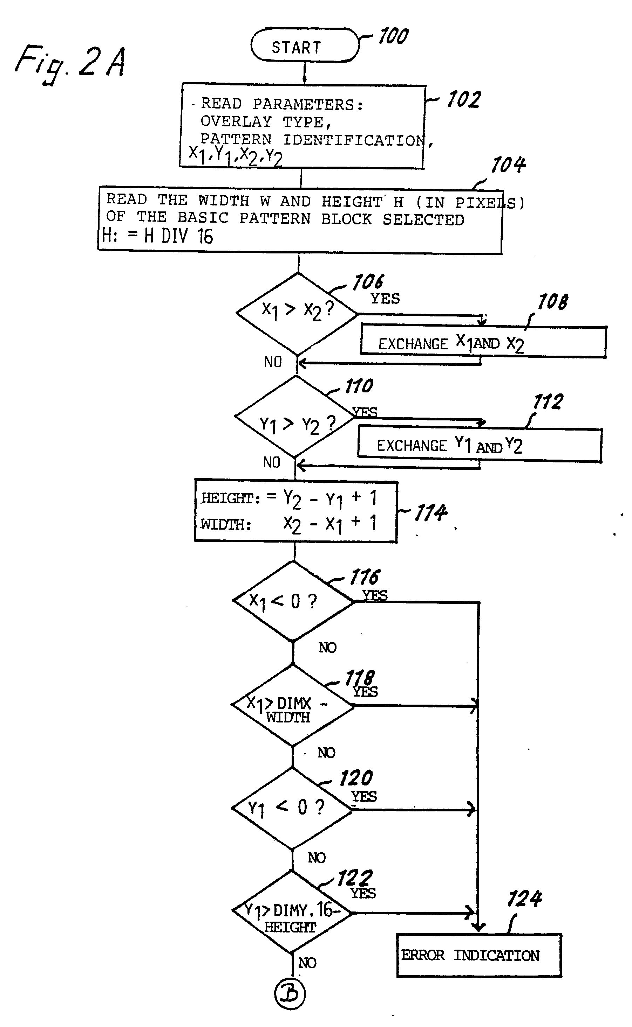

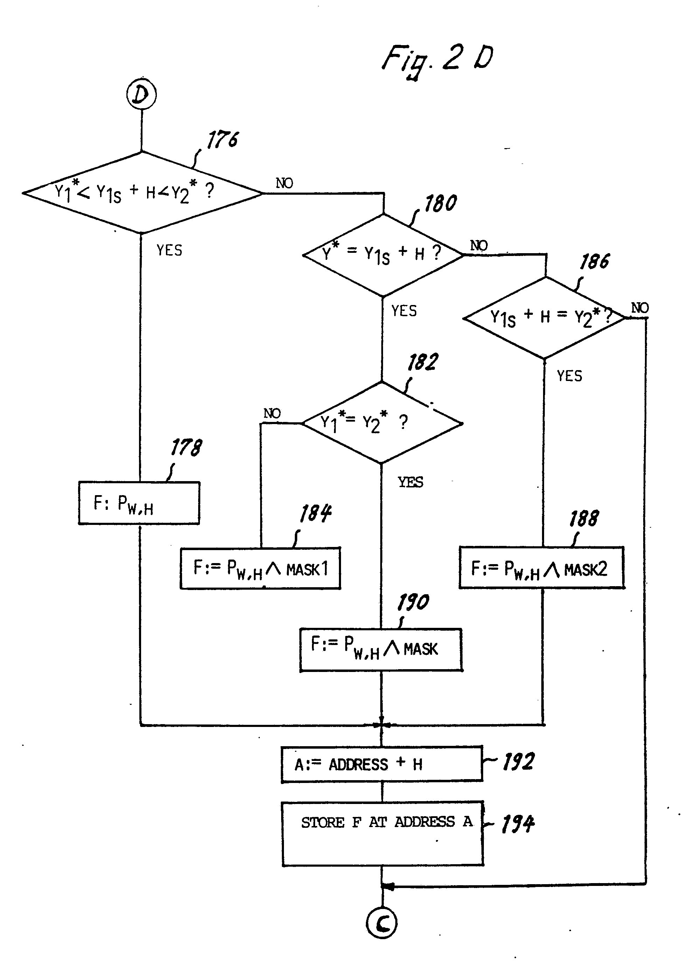

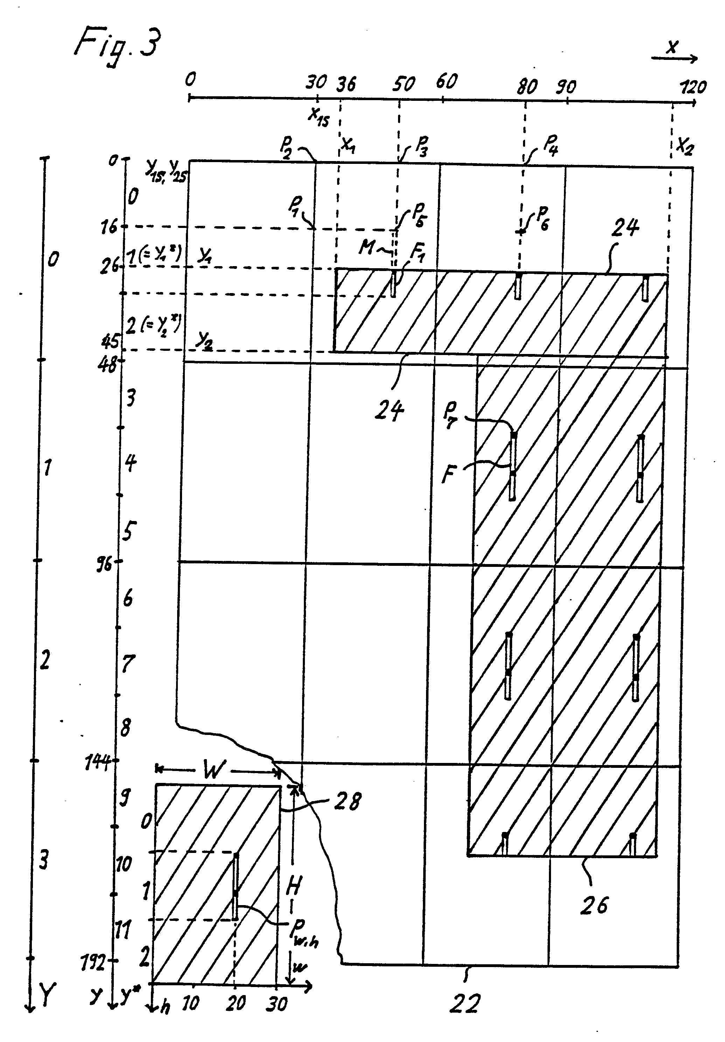

Figures 2A to 2E represent a flow diagram of a method according to the invention of filling a rectangular surface part with a surface pattern. The basic idea of the method will first be explained by reference to the example illustrated in Fig. 3. Fig. 3 illustrates a page 22 to be printed, the format being $120 \times 192$ pixels. For the sake of clarity, Fig. 3 shows a coarser dot raster than is used in practice. Two adjacent rectangular surface parts 24 and 26 are to be filled with the surface pattern already indicated in Fig. 3 without the surface pattern shifting at the boundary between the surface parts 24 and 26.

To this end, using the method illustrated in Figures 2A to 2E, the surface part 24 is first filled and then the method is used to fill the surface part 26. The basic idea of the method of filling a single rectangular surface part is that first the entire surface of the page 22 is filled with the surface pattern and then those areas which do not belong to that surface part are covered by means of a mask. When a large number of rectangular surface parts have been successively filled with the same pattern in this way, it is ensured that the pattern proceeds continuously at the boundaries between the surface parts. If the surface parts overlap, then the surface patterns in the overlap area are situated exactly one upon the other, thus giving a continuous pattern on the printed page.

The bottom left hand corner of Fig. 3 shows a basic pattern block 28 which contains the pattern to be filled in in the surface parts 24 and 26. The entire page 22 is sub-divided into a $4 \times 4$ block matrix, each matrix element corresponding to the basic pattern block 28. When 16 basic pattern blocks all corresponding to the basic pattern block 28 are connected up in accordance with the block matrix, a continuous surface pattern is formed which fills the entire page 22. To obtain the graphic information concerning the surface pattern it is sufficient to store the basic pattern of the relatively small basic pattern block 28 in the form of a bit-map in the pattern memory 13 or in the RAM 12 (Fig. 1). In the example illustrated, the basic pattern block has a format of $30 \times 48$ pixels. Since the pattern memory and the raster-image-memory 16 are constructed as word-oriented memories for 16-bit words, every sixteen pixels in a row are combined to form one word, and the dimensions in the vertical direction in Fig. 3 are indicated in words. Accordingly, the basic pattern block 28 has a width W = 30 pixels and a height H = 3 words, and the entire page 22 has a width DIMX = 120 pixels and a height DIMY = 12 words.

Various basic patterns, e.g. cross-hatching, dot gratings or line gratings of different line thicknesses or spacing or extending in different directions, are stored in the pattern memory 13 or in the RAM 12. In principle, any desired periodic surface pattern can be stored in this way. The various basic patterns may have different dimensions. There is a limitation in the example described only to the extent that the height of the basic pattern in pixels must be a multiple of 16. The operation of the raster-image-processor 15 in the filling of the surface part 34 with a surface pattern according to the basic pattern 28 will now be explained with reference to Figures 2A to 2E.

After the start of the cycle in step 100 in Fig. 2A, some parame ters input by the user are then read in via the VME bus 14. A variable overlay type indicates in a specific code the logic operation (e.g. PAINT) to be performed by the logic unit of the raster-image-memory 16. A basic pattern (e.g. the basic pattern 28 shown in Fig. 3) present in the pattern memory is selected by means of the variable "pattern identification". The surface part 24 to be filled is indicated by the coördinates $(x_1, y_1)$ and $(x_2, y_2)$ of two diagonally opposite corner points. Referring to Fig. 3, those coordinates have the following value: $x_1 = 36$, $x_2 = 115$, $y_1 = 26$ and $y_2 = 45$ (in pixels).

The width W and the height H of the basic pattern block 28 selected by means of the "pattern identification" is read in field 104 in Fig. 2A. The height H indicated in pixels is divided by 16 so that the height is obtained in words. In the example described, W = 30 and H = 3.

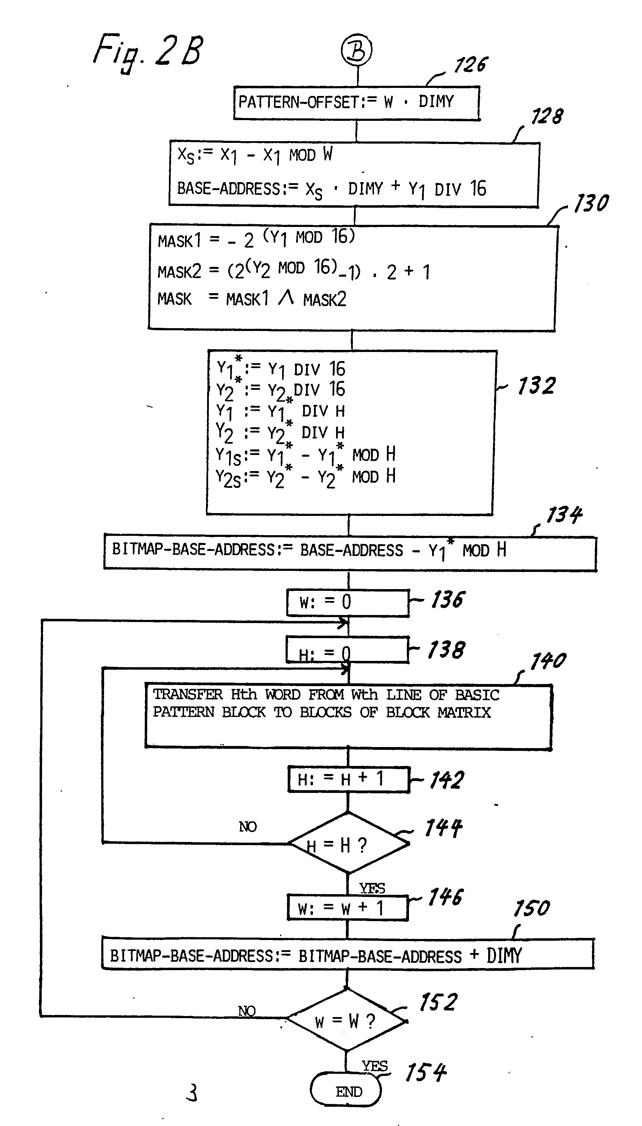

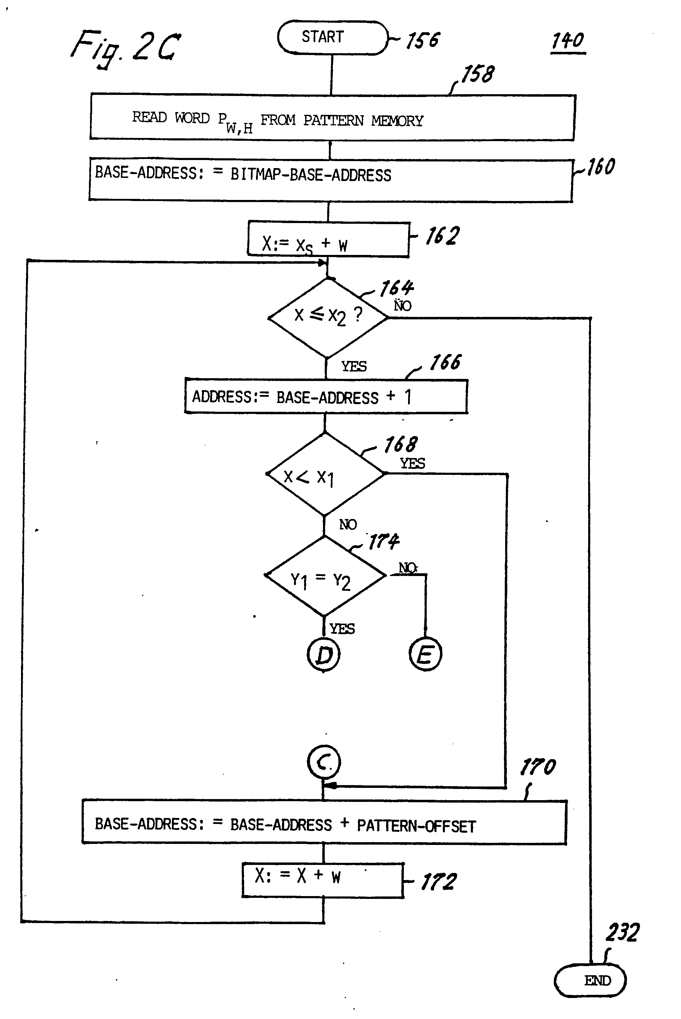

If, with boundaries of the surface part as indicated, $x_1$ is greater than $x_2$, the values of $x_1$ and $x_2$ are exchanged (steps 106 and 108). The values of $y_1$ and $y_2$ are exchanged correspondingly if $y_1$ is greater than $y_2$ (steps 110 and 112). This ensures that the surface part 24 is defined by the top left corner point and by the bottom right corner point. In the next steps 114 to 124 a test is carried out to check whether the boundaries of the surface part lie in the format DIMX $\times$ DIMY of page 22. Since the pixels which form the boundaries of the surface part 24 are also counted as belonging to the surface part, the difference between the coordinate values must be increased by 1 each time in the calculation of the height and the width of the surface part in step 114. If one of said boundaries of the surface part 24 falls outside the page format, an error signal is generated in step 124. A variable "pattern offset" is calculated in step 126 in Fig. 2B. This variable indicates the value by which the address of the raster-image-memory must be increased when a jump is carried out over the width W of the basic pattern (i.e. 30 pixels) in the x-direction. Since the addresses in the raster-image-memory 16 are numbered column-wise, said addresses must be increased by DIMY (the number of words in a column) in the case of a jump over 1 pixel in the x-direction. A variable $x_s = x_1 - x_1 \bmod W$ is then calculated in step 128. The variable $x_s$ indicates the left hand boundary of the block matrix, which thus contains the point $(x_1, y_1)$. In the example illustrated, $x_s = 36 - 36 \bmod 30 = 36 - 6 = 30$. The "base-address" value is then calculated according to "base-address" = $x_s \cdot$ DIMY + $y_1$ DIV 16. DIV denotes a division followed by the formation of a whole number of the quotient. Thus $y_1$ DIV 16 = 26 DIV 16 = 1. The "base-address" value is a provisional value for the addresses in the raster-image-memory 16. The corresponding point of page 22 is denoted by $P_1$ in Fig. 3.

The mask functions mask1, mask2 and mask are calculated in step 130. These mask functions serve to suppress the surface pattern outside the surface part 24. In the case of a rectagular surface part the mask functions need to be defined only on words which contain the top and bottom boundaries respectively of the surface part. In the example illustrated $y_1$ MOD 16 = 10. Mask1 is thus a 16-bit word which in the first ten binary places contains only zeroes and in the other six binary places only ones. When mask1 is placed, for example, on position M in the raster-image-memory in accordance with the word division of raster-image-memory 16 all the zeroes are situated outside the surface part 24 and the associated ones within the surface part. Mask2 is the corresponding mask function for the bottom boundary of the surface part 24. In the example illustrated, $y_2$ MOD 16 = 13. Mask2 is a 16-bit word, in which the first 13 binary places contain the value 1 and the last 3 binary places the value 0. To form the mask function "mask", mask1 and mask2 are combined per element by a logic AND-operation. The corresponding 16-bit word would, in the example, have the value 0 at the binary places 1 to 10, the value 1 at the places 11 to 13, and the value 0 at the places 14 to 16. The mask function is required when the top and bottom boundaries of the surface part lie within the same word. Some conversions of the y-coordinates are carried out in step 132. The values $y_1^*$ and $y_2^*$ respectively denote the top and bottom boundaries of that surface part in words. In Fig. 3, $y_1^* = 1$ and $y_2^* = 2$. The values $Y_1$ and $Y_2$ indicate in which line of the block matrix the top and bottom boundaries of the surface part respectively lie. In Fig. 3 the entire surface part 24 lies in the top line of the block matrix, which means that $Y_1 = Y_2 = 0$. The values $y_{1s}$ and $y_{2s}$ indicate in words those y-coordinates of the top boundary of the block matrix line which contains said top and bottom boundaries respectively of the surface part 24. In Fig. 3, $y_{1s} = y_{2s} = 0$.

In step 134 in Fig. 2B a base address "bitmap-base-address" of the raster-image-memory 16 is calculated. The corresponding point of page 22 is denoted by $P_2$ in Fig. 3 and lies in the top left hand corner of the block matrix which contains the point ($x_1$, $y_1$). The steps 136 to 152 form two loops running one through the other, in which the words of the basic pattern block 28 which are stored in the pattern memory are scanned column-wise and line-wise and are read into the raster-image-memory 16. The inner loop formed by steps 140 to 144 corresponds to the scanning of a line of the basic pattern block 28. The essential step 140 of this loop contais a sub-program by means of which a 16-bit word $P_{w,h}$ having a column index w and a line index h is called up from the pattern memory and - possibly after a logic operation with a mask function - is imaged on all those blocks of the block matrix at which at least a part of the word called up lies within the surface part 24. The special features of this sub-program are explained further with reference to Figures 2C to 2E.

After a column of the basic pattern block 28 has been fully scanned, the base-address "bitmap-base-address" is increased by DIMY in step 150. This corresponds to shifting the point $P_2$ by one pixel in the x-direction. The loop 138 to 152 is then traversed again to scan the next column of the basic pattern block 28. When all the columns have been scanned the surface part is completely filled with the surface pattern in accordance with the basic pattern 28 and the method is terminated at step 154.

The sub-program shown in step 140 starts at step 154 in Fig. 2C.

The words $P_{w,h}$ of the basic pattern block 28 are read serially via the VME bus 14. During this the columns of the basic pattern block, starting with the column on the extreme left, are scanned successively from top to bottom. The word read at step 158 in the sub-program 140 accordingly has precisely those column and line indices w and h which were previously set in the steps 142 and 146. In the example shown in Fig. 3 it is assumed that it is precisely the word $P_{20,1}$ of the basic pattern 28 that is read. In step 160 a variable address "base-address" is introduced and then made equal to the bitmap-base-address. For w = 20 "bitmap-base-address" corresponds to point $P_3$ in Fig. 3 because of the stepwise increase in step 150.

In step 162 a parameter X is defined which indicates in pixels what column of page 22 is being processed. In Fig. 3 the value of the parameter X is first equal to $x_s + w = 30 + 20 = 50$. As long as X is smaller than or equal to the right hand boundary $x_2$ of the surface part 24 (step 164), a further variable address "address" is defined in step 166 and made equal to the "base-address + 1". The number + 1 for addition is required because the addresses and data are transferred successively via the raster-image-bus 17, and is not shown in Fig. 3. If the parameter X is less than the left hand boundary $x_1$ of the surface part 24 (step 168), the corresponding word cannot yet be placed in the surface part 24. In the example shown in Fig. 3 this occurs when w is between 1 and 5. In that case, in step 170 the address "base-address" is increased by the value pattern-offset (jump from $P_3$ to $P_4$ in Fig. 3) and the parameter X is increased (to 80) in step 172 over the width W of the basic pattern block 28. The loop is then traversed again starting with step 164.

For the case w = 20, the comparison in step 168 shows that X is greater than or equal to $x_1$. In that case the word $P_{20,1}$ is introduced into the column X = 50 at all permissible places. To this end, in step 174 a decision is first taken whether the surface part 24 lies within a single line of the block matrix ($Y_1 = Y_2$) or whether the surface part extends over more lines of the block matrix, as is the case, for example, with the surface part 26 in Fig. 3($Y_1$ smaller than $Y_2$). In the case of the surface part 24, $Y_1 = Y_2 = 0$. As a result, step 176 in Fig. 2D is carried out as the next step. In this step a check is made whether the image of the

5

word $P_{w,h}$ in the block of page 22 indicated by $y_{1s}$ lies completely in the surface part 24. On this condition, which is not satisfied in the example in question, the word $P_{w,h}$ need not be modifed by one of the mask functions, and the filling pattern word F to be read in the raster-image-memory corresponds to the word $P_{w,h}$ (step 178).

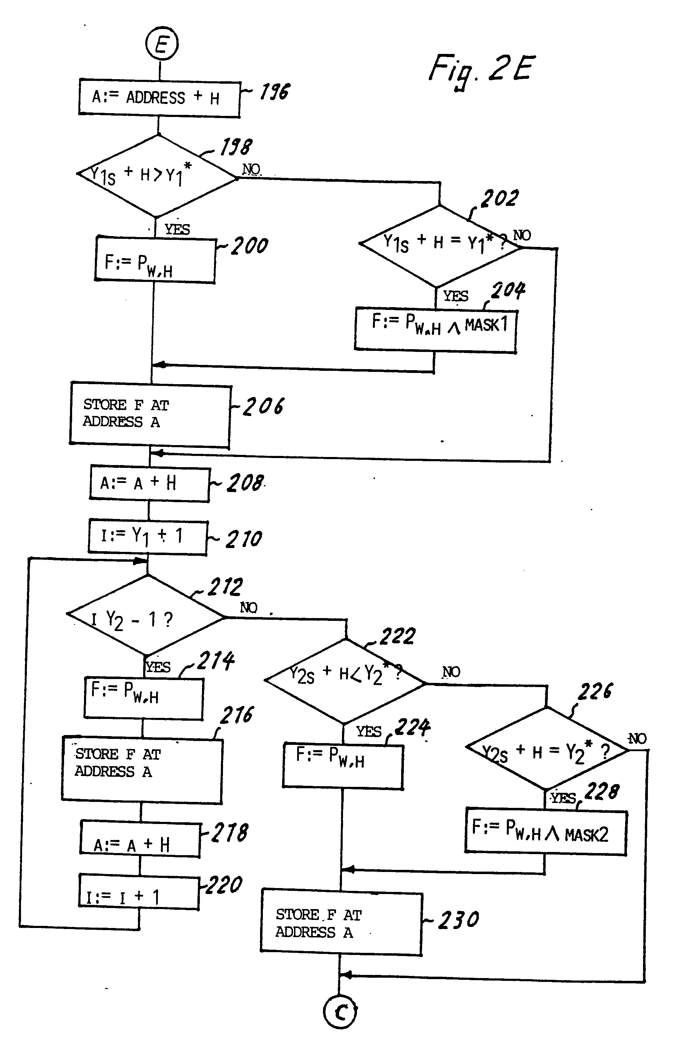

If the comparison in step 176 is not satisfied, a comparison is made in step 180 to see whether the image of the word $P_{w,h}$ lies at the top boundary $y_1^*$ of the surface part 24. If this is the case, as in the example illustrated, a check is made in step 182 whether said top or bottom boundary respectively of the surface part 24 lies within the same word zone ($y_1^* = y_2^*$). This is not the case in the example illustrated. The image $F_1$ of the word $P_{w,h}$ intersects only the top boundary of the surface part 24 and therefore undergoes an AND operation with the mask function mask1 in step 184. As a result, the areas situated outside the surface part 24 are excluded from the image. If step 180 shows that the image of the word does not lie on the top boundary of the surface part 24, a check is made in step 186 whether the image lies on the bottom boundary of the surface part 24. If that is the case, the word $P_{w,h}$ is modified in step 188 by means of mask2. In the other case, i.e. if the image of the word is not covered by the surface part 24 at all, the program is continued at step 170 (Fig. 2C). If comparison in step 182 shows that the image of the word intersects both the top boundary $y_1$ and the bottom boundary $y_2$ of the surface part 24, the filling pattern word F is generated in step 190 by omitting the said top and bottom boundary respectively at the word $P_{w,h}$ by means of the mask function mask. After the filling pattern word F for the block in question has been defined in one of the steps 178, 184, 188 or 190, the end address a = address + h for the raster-image-memory 16 is determined in step 190. This address corresponds to point $P_5$ in Fig. 3. The filling pattern word F is set aside in the raster-image-memory 16 at address a via the raster-image-bus 17 in step 194. Step 170 then proceeds with the next column of the block matrix. If step 174 (Fig. 2C) shows that the surface part to be filled extends over several matrix lines of the block matix, the procedure illustrated in Fig. 2E is carried out. This procedure will be explained by reference to the word $P_{20,1}$ and the surface part 26 in Fig. 3. It is assumed that the address "address" in step 166 has a value corresponding to point $P_4$ in Fig. 3. This means that the first block to be processed is the one containing the top left hand corner of the surface part 26.

In step 196 the address a is made equal to the value address + h corresponding to point $P_6$. If the image of the word $P_{w,h}$ (wit a y-coordinate $y_{1s}$ + h) lies fully within the surface part 26 (step 198), the word $P_{w,h}$ is taken as the filling pattern word F (step 200). If the image of the word intersects the top boundary of the surface part 26 (step 202), the word $P_{w,h}$ is modified with mask1 (step 204). The filling pattern word F determined in step 200 or 204 is stored at address a in step 206. If it appears in step 202 that the image of the word lies completely outside the surface part 26 (above the top boundary), the word cannot by set aside in that block. Following step 206 or 202, the next block in the relevant column of the block matrix is processed. The address a is increased, in step 208, with a value corresponding to the height H of the basic pattern block 28 (point $P_7$). The value $Y_1$ indicates the line of the block matrix of page 22 which contains the top boundary of the surface part 26 and in the example illustrated has the value 0. The value $Y_2$ indicates the matrix line which contains the bottom boundary of the surface part 26, and has the value 3 here. In the case of the blocks in the matrix lines 1 and 2, the image of the word $P_{w,h}$ lies in each case within the surface part 26. These blocks are processed successively in a loop formed by steps 212 to 220. For this purpose, an index i is defined in step 210, which after each run-through of the loop is increased in step 220 until it reaches the value $Y_2$-1 (step 212). On each run-through of the loop the filling pattern word F = $P_{w,h}$ is placed in the relevant block in steps 214 and 216, and in step 218 the address a is switched on to the block therebeneath. After the loop has been completely processed, the block containing the bottom boundary of the surface part 26 is processed starting with step 222. The steps 222 to 230 are similar to the steps 198 to 206 for the block containing the top boundary of the surface part. After the entire column of the block matrix has been processed, the next column of the block matrix is taken at step 170 (Fig. 2C). If step 164 shows that the column X in which the image of the word $P_{w,h}$ is to be placed lies outside $x_2$ it means that a filling pattern word F corresponding to the word $P_{w,h}$ was placed in all the permissible places of the surface part and the sub-program is terminated with step 232.

When the surface parts 24 and 26 have been successively filled with the surface pattern by the above-described method, a uniform surface pattern forms which extends over the two surface parts 24 and 26 as will be seen in Fig. 3. This is achieved by defining a uniform surface pattern on the entire page 22 by means of the basic pattern block 28 and the block matrix division of page 22.

To save processing time, the surface pattern is not really generated over the entire page 22. The surface pattern is generated only in those blocks of page 22 which are overlapped by the surface part to be filled. The exact position of the surface pattern is nog defined by the boundaries of the surface part to be filled, but by the block boundaries.

With the above described method, the relevant part of the block matrix is scanned for each word $P_{w,h}$ which is called up from the pattern memory 13, to enable the word to be deposited at all permissible places. This has the advantage that the time-consuming reading out of the pattern memory via the VME bus is necessary only rarely, namely only for each word of the basic pattern block 28. If the reverse way were taken and if the corresponding word were called up from the pattern memory for each word lying in the surface part to be filled, then the processing time required to fill the blocks would be determined by the read-in time T(VME) via the VME bus. The processing time for a surface part having a width x and a height y (the height in words) would then be:

$$T1 = T(VME) \cdot x \cdot y. \qquad (1)$$

With the method according to the invention the required processing time can be calculated as follows:

$$T2 = (T(VME) + \frac{x}{W} \cdot T(SCAN) + \frac{x \cdot y}{W \cdot H} \cdot T(RIBus)) \cdot W \cdot H. \qquad (2)$$

Here T(RIBus) denotes the cycle time of the raster-image-bus 17 and T(SCAN) the processing time required for the changeover from a column of the block matrix to the next column. The raster-image-processor 15 comprises an address sequencer (2910A of Messrs. Advanced Micro Devices), by means of which the loop, consisting of steps 212 to 220 in Fig. 2E, for filling in the blocks in one and the same column of the block matrix can be completed very quickly. The blocks of one and the same column can accordingly be processed within the cycle time of the raster-image-bus 17 so that no extra computing time is necessary for this. Since the cycle time T(RIBus) of the raster-image-bus 17 is usually considerably less than the cycle time T(VME) of the VME bus, the method according to the invention gives a considerable saving in time. In a practical front-end system T(VME) is about 1 $\mu$ sec. while T(RIBus) and T(SCAN) are about 400 nsec. Consequently:

$$\frac{T2}{T1} = \frac{W \cdot H}{x \cdot y} + 0.4 \cdot \frac{H}{y} + 0.4 \qquad (3)$$

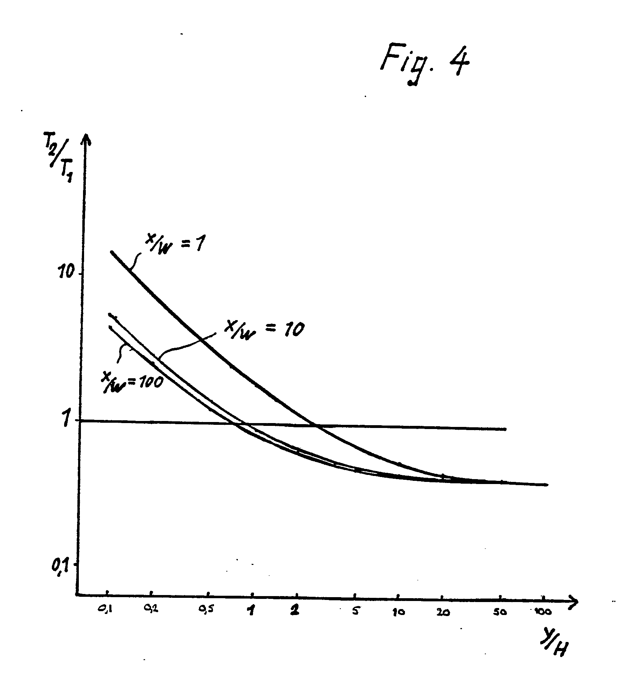

The ratio T2/T1 is represented graphically in Fig. 4 for various values of W/x. T2 is smaller than T1 if the height y of the surface part to be filled is at least 0.5 to 2 times the height H of the basic pattern block. A normal basic pattern block has a width of 6 pixels and a height of 48 pixels which corresponds to a height of about 2.4 mm. In nearly all practical cases the height of the surface part to be filled is much greater then the height of the basic pattern block, so that the method according to the invention has advantages.

The invention is not limited to the embodiment described. Using a com parable method it is possible, for example, to fill surface parts which are not rectangular. The skilled addressee can make all kinds of modifications to the example described but they all come under the following claims.

**Claims**

1. A method of filling with a surface pattern surface parts (24, 26) of an image stored in the form of a bit-representation in a raster-image-memory (16), characterised by
-the generation of a bit-representation of a surface pattern (28) defined uniformly over the entire image surface,
-the generation of a mask function (mask1, mask2, mask), which gives a first logic value to those raster points which are situated within the boundaries of the surface parts (24, 26) and a second logic value to those raster points which are situated outside said boundaries,
-the generation of a filling pattern (F) by performing a logic operation on the bit-representation of the surface pattern and the mask function and
-the transfer of the filling pattern (F) to the raster-image-memory (16).

2. A method according to claim 1, characterised in that on transfer to the raster-image-memory (16) the filling pattern (F) is combined with the existing contents of the raster-image-memory by means of a logic operation selected by the user.

3. A method according to claim 1 or 2, in which the surface pattern is periodic in at least one dimension, characterised in that the bit-representation of the surface pattern defined on the entire image surface is generated by means of a bit representation of a basic pattern block (28) periodically returning in the surface pattern, said bit-representation being permanently stored in a pattern memory (13), the generation being effected by dividing the entire image surface (22) into a block matrix, the matrix elements always corresponding to the basic pattern block (28), and by scanning the block matrix line-wise and/or column-wise with the basic pattern block.

4. A method according to claim 3, characterised in that the pattern memory (13) and raster-image-memory (16) are word-oriented memories and in that each of the words stored in the pattern memory (13) is called up from the pattern memory only once and is imaged line-wise and/or column-wise on the various blocks of the block matrix.

5. A method according to claim 4, characterised in that the basic pattern words ($P_{w,h}$) are imaged only on those blocks of the block matrix which have at least one raster point in common with the surface part (24, 26) to be filled.

6. A method according to claim 5, characterised in that for each basic pattern word ($P_{w,h}$) and for the separate blocks of the block matrix the place of the image of the basic pattern word is determined with respect to the surface part (24, 26) to be filled, and in that the word is logically associated with the mask function to generate the corresponding filling pattern word (F) only when the word lies partially within and partially outside the surface part to be filled, and in that the basic pattern word ($P_{w,h}$) is read unchanged into the raster-image-memory as a filling pattern word (F) only when that word lies fully within the surface part.

7. A method according to claim 6, of filling rectangular surface parts (24, 26), the surface parts and the basic pattern block (28) being oriented in the x-y-direction and the words and the columns of the block matrix extending in the y-direction, characterised in that for each basic pattern word ($P_{w,h}$) and for the individual columns of the block matrix a check is made whether the image of the basic pattern word in the blocks of this column in the x-direction lies beneath the bottom boundary ($x_1$) of the surface part or above the top boundary ($x_2$) of the surface part and if so is proceeded with the next column of the block matrix or with the next basic pattern word.

8. A device for performing a method according to anyone of the preceding claims.

FiG 1

# Fig. 2A

START — 100

READ PARAMETERS: — 102
OVERLAY TYPE,
PATTERN IDENTIFICATION,
$X_1, Y_1, X_2, Y_2$

READ THE WIDTH W AND HEIGHT H (IN PIXELS) — 104
OF THE BASIC PATTERN BLOCK SELECTED
H: = H DIV 16

$X_1 > X_2$? — 106

YES → EXCHANGE $X_1$ AND $X_2$ — 108

NO

$Y_1 > Y_2$? — 110

YES → EXCHANGE $Y_1$ AND $Y_2$ — 112

NO

HEIGHT: = $Y_2 - Y_1 + 1$ — 114
WIDTH: $X_2 - X_1 + 1$

$X_1 < 0$? — 116 YES

NO

$X_1 >$ DIMX - WIDTH — 118 YES

NO

$Y_1 < 0$? — 120 YES

NO

$Y_1 >$ DIMY.16 - HEIGHT — 122 YES

NO

ERROR INDICATION — 124

B

2

*Fig. 2B*

(B)

PATTERN-OFFSET:= W · DIMY  *126*

$X_S := X_1 - X_1$ MOD W

BASE-ADDRESS:= $X_S$ · DIMY + $Y_1$ DIV 16  *128*

MASK1 = $- 2^{(Y_1 \text{ MOD } 16)}$

MASK2 = $(2^{(Y_2 \text{ MOD } 16)} - 1)$ · 2 + 1

MASK  = MASK1 $\wedge$ MASK2  *130*

$Y_1^* := Y_1$ DIV 16
$Y_2^* := Y_2$ DIV 16
$Y_1 := Y_1^*$ DIV H
$Y_2 := Y_2^*$ DIV H
$Y_{1s} := Y_1^* - Y_1^*$ MOD H
$Y_{2s} := Y_2^* - Y_2^*$ MOD H  *132*

BITMAP-BASE-ADDRESS:= BASE-ADDRESS $- Y_1^*$ MOD H  *134*

W: = 0  *136*

H: = 0  *138*

TRANSFER Hth WORD FROM Wth LINE OF BASIC PATTERN BLOCK TO BLOCKS OF BLOCK MATRIX  *140*

H: = H + 1  *142*

NO ← H = H ?  *144*

YES

W: = W + 1  *146*

BITMAP-BASE-ADDRESS:= BITMAP-BASE-ADDRESS + DIMY  *150*

NO ← W = W ?  *152*

YES

END  *154*

3

**Fig. 2C**

START — *156*

*140*

*158*

READ WORD $P_{W,H}$ FROM PATTERN MEMORY

BASE-ADDRESS: = BITMAP-BASE-ADDRESS — *160*

$X := X_S + w$ — *162*

$X \leq X_2$ ? — *164* — NO

YES — *166*

ADDRESS := BASE-ADDRESS + 1

$X < X_1$ — *168* — YES

NO

*174* — $Y_1 = Y_2$ — NO

YES

(D)  (E)

(C)

*170*

BASE-ADDRESS: = BASE-ADDRESS + PATTERN-OFFSET

$X := X + w$ — *172*

*232*

END

4

Fig. 2 D

0 249 285

5

Fig. 2E

(E)

A := ADDRESS + H — 196

$Y_{1S} + H > Y_1^*$ — 198 —NO→ $Y_{1S} + H = Y_1^*$? — 202 —NO→

YES ↓

F := $P_{W,H}$ — 200

YES ↓

F := $P_{W,H} \wedge MASK1$ — 204

STORE F AT ADDRESS A — 206

A := A + H — 208

I := $Y_1 + 1$ — 210

I $Y_2 - 1$? — 212 —NO→ $Y_{2S} + H < Y_2^*$? — 222 —NO→ $Y_{2S} + H = Y_2^*$? — 226 —NO→

YES ↓ 214

F := $P_{W,H}$

STORE F AT ADDRESS A — 216

A := A + H — 218

I := I + 1 — 220

YES ↓ 224

F := $P_{W,H}$

YES ↓ 228

F := $P_{W,H} \wedge MASK2$

STORE F AT ADDRESS A — 230

(C)

Fig.3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | NL-A-8 503 461 (OCE-NEDERLAND) <br> * Figures 1,9-11; page 18, line 24 - page 22, line 28 * | 1 | G 06 F 15/72 <br> G 06 K 15/00 <br> B 41 B 19/00 |
| A | EP-A-0 174 809 (TEKTRONIX) <br> * Figures 1-6; page 1, line 4 - page 3, line 5; page 3, line 25 - page 5, line 28 * | 1 | |
| A | US-A-4 300 206 (J.G. BELLESON et al.) <br> * Figures 1-6; column 3, line 6 - column 5, line 7 * | 1 | |
| A | EP-A-0 158 902 (WANG LABORATORIES) <br> * Figures 1-8; page 22, last paragraph - page 27, last line * | 1 | TECHNICAL FIELDS SEARCHED (Int. Cl.4) <br><br> G 06 K <br> G 06 F <br> B 41 B |

The present search report has been drawn up for all claims

| Place of search | Date of completion of the search | Examiner |
|---|---|---|
| THE HAGUE | 22-09-1987 | GYSEN L.A.D. |